# EUROPEAN PATENT SPECIFICATION

(11) **EP 1 677 611 B1**
(45) Date of publication and mention of the grant of the patent: **14.04.2010**
(21) Application number: 04762919.1
(22) Date of filing: 13.10.2004
(51) Int. Cl.: A22C 21/06

(54) **PROCESS FOR EVISCERATION OF SLAUGHTERED POULTRY, SLAUGHTERING SYSTEM FOR THE TREATMENT OF VISCERA FROM SLAUGHTERED POULTRY AND A VISCERA HOLDER FOR A VISCERA CONVEYOR IN A SLAUGHTERING SYSTEM**
VERFAHREN ZUM AUSWEIDEN VON GESCHLACHTETEM GEFLÜGEL, SCHLACHTSYSTEM ZUR BEHANDLUNG DER EINGEWEIDE VON GESCHLACHTETEM GEFLÜGEL UND EINGEWEIDEHALTER FÜR EINE EINGEWEIDEBEFÖRDERUNGSEINRICHTUNG IN EINEM SCHLACHTSYSTEM
PROCEDE D'EVISCERATION DE VOLAILLES ABATTUES, SYSTEME D'ABATTAGE POUR LE TRAITEMENT DE VISCERES DES VOLAILLES ABATTUES ET SUPPORT DE VISCERES POUR UN TRANSPORTEUR DE VISCERES DANS UN SYSTEME D'ABATTAGE

(30) Priority: 15.10.2003 DK 200301518
(43) Date of publication of application: 12.07.2006
(73) Proprietor: Linco Food Systems A/S, 8380 Trige (DK)
(72) Inventor: ANDERSEN, Torben, DK-8585 Glesborg (DK)
(74) Representative: Indahl, Peter Jensen
(86) International application number: PCT/DK2004/000700
(87) International publication number: WO 2005/036973

(56) References cited:
- EP-A- 0 679 336
- EP-A- 0 839 455
- EP-A- 1 135 990
- EP-A- 1 222 858

## Description

The present invention relates to a process for evisceration of slaughtered poultry, a viscera set of a bird being gripped by a mechanical eviscerator inside the bird and moved out of the bird and automatically delivered to a viscera holder on a viscera conveyor leading the viscera set away from the eviscerator.

Such a process is described in WO 98/44806, according to which the viscera set is gripped in a spoon and with a gripper inside the bird and is passed out of the bird, whereupon the viscera fall out of the spoon and swing downwards for suspension from the gripper. In this suspended position, the viscera set is held by the gullet in the gripper until another gripper on the viscera conveyor has taken hold of the viscera set. It is a disadvantage that two mutually separate places on the gullet must be fixed at the same time as, in terms of space, this limits the design of grippers with pertaining control while the accurate, simultaneous gripping at two points at the gullet constitutes a bar to the speed of transfer of the viscera set from the eviscerator to the viscera conveyor.

A similar process suffering from the same drawbacks is described in EP 1 135 990, only here the gripping of the viscera set is achieved without the use of a spoon.

EP 0 541 150 describes a viscera conveyor with a disc rotatable about a horizontal axis and with radial slots from which viscera sets can be suspended with the liver located at one side of the vertical disc and heart and lungs on the other side of the disc.

EP 0 890 315 describes an eviscerator in which the viscera are suspended from the gripper with a vertical orientation after the evisceration. According to the publication, it is desired to maintain this orientation during the transfer to the viscera conveyor and at the subsequent movement of the viscera set past an inspection station and onwards through processing machines that separate the usable viscera from the intestines, etc.

As the vertical orientation of the viscera is maintained past the inspection station, the inspection must be carried out on the viscera suspended vertically from the gullet. Quite frequently, it is therefore necessary for inspectors to take hold of viscera sets and turn them around to see the parts of the viscera facing away from the inspector. The manual handling of the viscera sets involves a risk of transfer of impurities from one viscera set to other sets, so-called cross-contamination. This implies both poorer quality of the usable parts of the viscera and a workload for the inspectors.

This increased workload is a bar to inspection at very high speeds. Over the years, the systems have generally developed towards ever faster processing of the birds, currently around 2 to 3 birds per second, but the relatively poor inspection conditions in prior-art systems constitute a bar to a further increase in the processing speed.

The object of the present invention is to improve the transfer of viscera sets from the eviscerator to the viscera conveyor in a manner so that the viscera can be inspected at a higher speed.

In view of this, the process according to the invention is **characterized in that** the eviscerator releases the viscera set in a position above the top side of a carrier surface of a viscera holder, whereupon the viscera set falls downwards and is received on the viscera holder in a manner so that the intestines are suspended below the carrier surface while the heart, liver and crop lie on top of the top side of the carrier surface.

The heart, liver and crop can be deposited on the carrier surface of the viscera holder without any special transfer accuracy in terms of distance because it is not necessary to maintain the same orientation as the vertical orientation produced by suspension from a gripper. The grip in the viscera can be released at a time when the viscera holder is merely located near the intestines. This results in the advantage in terms of space that the holder need not be brought to a distance of 1 to 3 cm from the gripper as was the case in the prior art of transferring viscera sets. As the intestines are elongated and the heart, liver and crop take up considerably more space than the intestines in the transverse direction, even rather rough movements will result in correct deposition on the viscera holder.

This also provides the advantage in terms of time that synchronization between the movements of the gripper and the holder can be less accurate because it is not necessary to take over a precise grip at a specific place in the viscera set. This allows even faster speed of operation for the eviscerator and the viscera conveyor.

Of course, it is possible within the scope of the invention to grip the viscera very accurately at the transition between intestines and the superjacent viscera when the viscera are suspended from the gullet so that one grip is replaced by another grip, but preferably there is more margin in the transfer of viscera. In one embodiment of the invention, the eviscerator fixes a portion of the viscera set inside the bird and keeps hold of the portion during the evisceration from the bird until the grip in the portion is released at a position above the carrier surface, whereupon the viscera set falls downwards and is received on the viscera holder with the intestines suspended below the carrier surface. In this connection it is possible to transfer the eviscerated viscera from the eviscerator to the viscera conveyor by means of an intermediate unit, which takes over the grip in the portion of the eviscerated viscera and moves them to the viscera conveyor. This intermediate, mechanical and fully automatic member is part of the eviscerator and is typically designed as an intermediate wheel with a number of viscera grippers. The advantage of the intermediate wheel is that the viscera are brought out suitably far from the very compact eviscerator, providing sufficient space for the viscera conveyor to have an advantageously simple design.

The evisceration and the transfer to the viscera conveyor may be performed in a manner so that the fixing member of the eviscerator grips the viscera inside the bird and moves them out of the bird, and so that the viscera holder is moved under the fixing member at a level with the suspended intestines, whereupon the fixing member releases its grip in the viscera, the intestines of which fall down past the viscera holder, whereas the heart, liver and crop land on the carrier surface. This obviates the use of an intermediate member. As each individual gripping and transfer imply a risk of a faulty grip and thus loss of a viscera set, this process provides a particularly low rate of errors in the transfer of viscera to the viscera conveyor.

Preferably, the orientation of the viscera set is changed in connection with the receipt thereof on the carrier surface from a substantially vertical orientation produced by the eviscerator before the viscera set is released therefrom to a substantially horizontally spread-out orientation of heart, liver and crop. The spreading out of the important viscera in the horizontal plane provides the special advantage in connection with inspection of the viscera that not only are the intestines removed from the viscera to be inspected, but these viscera are also horizontally spread out at the inspection and thus directly available for visual inspection. This allows even faster inspection. As an alternative to this horizontal spreading out, the heart, liver and crop may lie in a more narrow space in a kind of pile, which provides some improvement of the inspection because the intestines are not barring the inspector's view of the viscera, or the said organs may be spread out on an inclined surface.

To facilitate the visual separation of the intestines from the usable viscera, the viscera holder may advantageously be designed with a possibility of actuation to assume at least a first position in which the intestines can pass from above and down past the carrier surface, and a second position in which the heart, liver and crop are prevented from passing from above down past the carrier surface. This allows the viscera holder to be passed to a suspended viscera set while the holder assumes the first position. The holder can then be switched to the second position, whereupon the viscera are released so that they fall down on the carrier surface.

To obtain a particularly simple transfer of viscera sets, it is preferred in connection with the eviscerator's release of the grip in the viscera that a carrier surface recess, open in the transverse direction, is moved in around the intestines under the heart, liver and crop, which then fall down on the carrier surface.

The present invention further relates to a slaughtering system for the treatment of viscera from slaughtered poultry, comprising at least a bird conveyor, an eviscerator and a viscera conveyor, the eviscerator having eviscerator units automatically eviscerating viscera sets from birds suspended in the bird conveyor, the eviscerated viscera sets being automatically transferred from the eviscerator units to viscera holders on the viscera conveyor.

To improve conditions at the treatment of the viscera after the evisceration, the slaughtering system is **characterized in that** the viscera holders are synchronously movable to positions under the eviscerator units so that, after being released by the eviscerator unit, a viscera set falls downwards and is gripped by the viscera holder in a manner so that the heart, liver and crop of the viscera set are lying on the top side of the carrier surface and the intestines are suspended through an opening in the carrier surface. The suspended intestines are located completely separately from heart, liver and crop, which directly allows for separate treatment of the intestines on the underside of the carrier surface and of heart, liver and crop on the top side. The carrier surface provides effective separation of the intestines from the other viscera. An advantage of this in terms of hygiene is that any impurities leaked from the intestines cannot come into contact with the edible parts of the viscera. It also provides a good possibility for removal of the intestines without damage to the other viscera.

In a preferred embodiment, the viscera conveyor runs past an inspection station, and the heart, liver and crop of the viscera set lie spread out on the carrier surface while the viscera holder passes the inspection station. The separation by the carrier surface of the location of the intestines from the other organs has been utilized to facilitate inspection, as the intestines are not in the way of the inspection of the organs on the top side of the carrier surface. This means that the inspection may be performed faster and in a manner that causes no cross-contamination because the inspector need never or only rarely touch the viscera.

Preferably, the width of the opening in the carrier surface makes it possible to pull the gall bladder down through the opening while the heart, liver and crop remain on the top side of the carrier surface. This makes it possible to exert a downward pull in the intestines before they are cut off so that the gall bladder is pulled down to the underside of the carrier surface. When the intestines are subsequently cut off, also the gall bladder will be cut off without any risk of gall spreading to the edible organ members.

In a further aspect, the present invention relates to a viscera holder for a viscera conveyor in a slaughtering system of the above type, the viscera holder having an upper part for mounting on the viscera conveyor, a central control member and a lower part with two bowl members swingable by the control member between a receiving position in which the bowl parts can be brought in around suspended intestines, and a transport position in which an opening in the bowl bottom has a width allowing the intestines to pass, but not the heart, liver and crop. Such a viscera holder provides the special advantage in connection with the slaughtering system that, in the receiving position, the bowl parts can be moved at high speed into the area of the intestines at the same time as the viscera are released and start falling downwards. In the transport position, the heart, liver and crop are prevented from falling down through the opening between the bowl parts, but are instead caught on the top side of the carrier surface in a position in which the intestines remain suspended through the opening.

The opening in the bowl bottom may suitably be elongated with a width in the interval from 4 to 8 mm, preferably 5 to 7 mm, and a length of at least 30 mm, preferably at least 50 mm. The opening width of at least 4 mm ensures that the intestines are not squeezed, and if the width of the opening is smaller than 7 mm the risk that liver parts may unintentionally hang down through the opening is very limited. For most chicken sizes, the gall bladder can be pulled down through the opening without any risk of rupture when the width is in the interval from 5 to 7 mm.

Preferably, the bowl bottom is a substantially square surface encircled by an upright bowl rim when the bowl parts assume the closed position. The square surface gives heart, liver and crop a good possibility of spreading out in a horizontal direction in the random orientation obtained through the fall down onto the carrier surface. The bowl rim helps prevent viscera parts from sliding out over the rim and thus ensures a reasonably well-arranged presentation of the viscera for inspection.

In one embodiment, the two bowl parts of the viscera holder are mutually movable between the receiving position in which the bowl parts are relatively far apart, and the transport position in which the bowl parts are close to each other with their edge portions substantially abutting each other. In the receiving position with the bowl parts swung away from each other, the opening between the bowl parts is large and provides good space for the bowl part movement inwards around a suspended viscera set, whereupon the bowl parts can be moved towards their closed position while the intestines fall down on the viscera holder.

In another embodiment, the two bowl parts of the viscera holder abut each other in the receiving position in which the opening in the bowl bottom expands in a wedge shape to a larger width in the direction of the receiving side, and the bowl parts are swingable about a horizontal axis as a unit in a direction towards a suspended viscera set to be delivered on the viscera holder. This embodiment is suitable for receiving viscera sets direct from the fixing member of the eviscerator, because as a result of the swinging movement towards the suspended viscera the viscera holder can be suspended from a viscera conveyor located at a suitably large distance from the eviscerator so as to obviate the use of an intermediate wheel. This simplifies the design of the eviscerator.

Examples of embodiments and the various aspects of the invention will now be described in more detail below with reference to the highly schematic drawing, in which
Fig. 1 is a top view of an outline of a slaughtering system with an eviscerator and a viscera conveyor according to the invention in which the eviscerator has an intermediate wheel,
Fig. 2 is a top view of an outline of a slaughtering system with an eviscerator and a viscera conveyor according to the invention in which the eviscerator is designed without an intermediate wheel,
Fig. 3 is a side view illustration of the transfer of viscera from the eviscerator to the viscera conveyor of Fig. 1,
Figs. 4-7 are side, front and top views, respectively, of one embodiment of the viscera holder in its transport position and in Fig. 7, in front view, in the receiving position,
Figs. 8-10 are side view illustrations of the transfer of viscera from the eviscerator to the viscera conveyor of Fig. 2, and
Figs. 11-14 are side, front and top views, respectively, of another embodiment of the viscera holder in its receiving position and in Fig. 14 in front view in the emptying position.

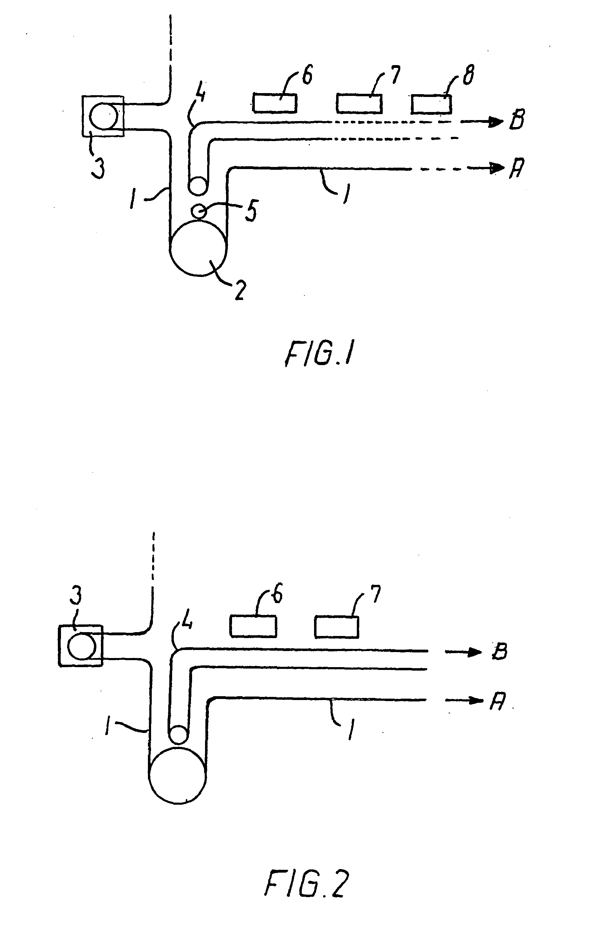

The slaughtering system shown in Fig. 1 comprises a bird conveyor 1 passing slaughtered birds such as chickens or larger birds such as turkeys to an eviscerator 2 after they have passed defeathering machines, an end cutter 3 opening a passage to the viscera in the body cavity, and other usual machines in the slaughtering line in preparation for evisceration. In the eviscerator 2, the viscera set is removed from the body cavity of the bird. There are many different eviscerators capable of performing this function. Reference is made to eviscerators of the types described in, for example, WO 98/44806, EP 0 497 014, EP 0 178 272, EP 0 538 943, EP 0 890 315, WO 01/52659 or US 4,467,498.

In Fig. 1, the eviscerated viscera sets are delivered to a viscera conveyor 4 via an intermediate wheel 5 at the eviscerator 2, and in Fig. 2 directly to the viscera conveyor 4. The eviscerated carcasses are passed onwards by the bird conveyor along the slaughtering line in the direction of the arrow A. The viscera sets are passed by the viscera conveyor 4 past an inspection station 6, an intestine cutter 7 and one or more picking units 8 at which usable parts of the viscera are picked out of the viscera set. The viscera set is passed on in the direction of the arrow B through its part of the slaughtering line. It is also possible for the viscera sets simply to be passed to a disposal container if they are not to be used. It depends entirely on the specific slaughtering line whether the viscera are to be used, and it also depends on the relevant country's rules for veterinary inspection whether there is an inspection station at all.

For the sake of simplicity, the same reference numerals are used in the various figures for details of the same type or function.

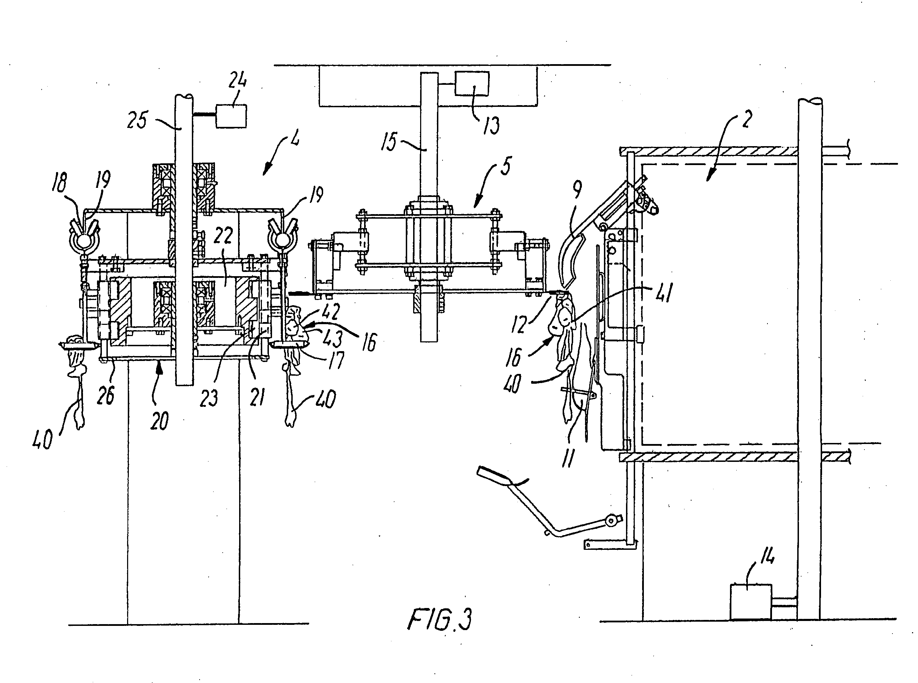

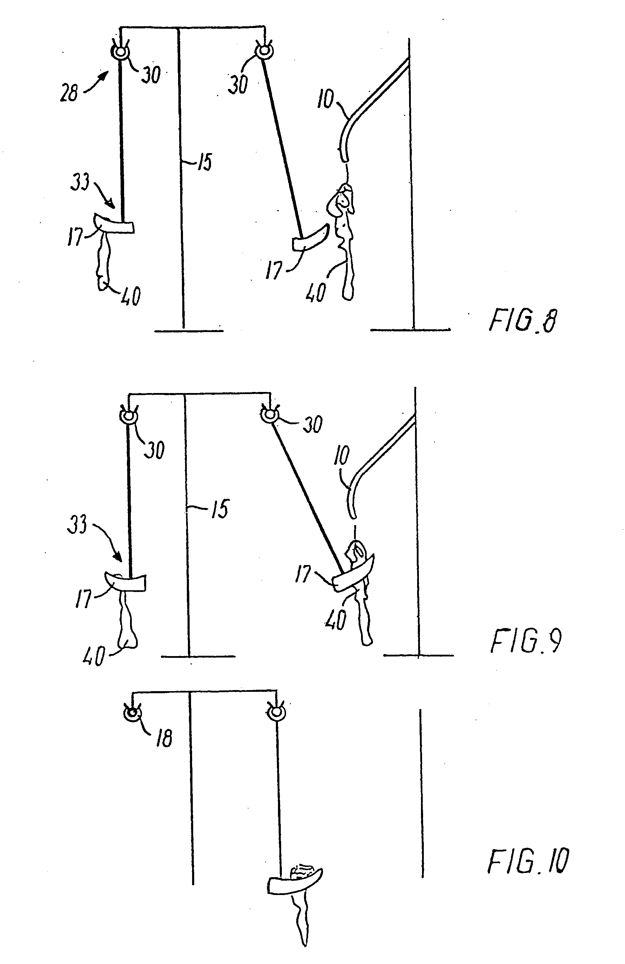

Fig. 3 shows in more detail how a viscera set can be delivered from the eviscerator 2 to the viscera conveyor 4. The eviscerator has an evisceration means 9 which removes the viscera from the body 11 of the bird. The means may be formed as a spoon that encircles the viscera inside the body and lifts them out, or as a fixing member 10 (see Fig. 8) that grips and fixes a portion of the viscera, such as the gullet, inside the bird body, and lifts out the viscera while maintaining the fixation, or as combinations thereof.

When the viscera set 16 has been removed from the bird body, a holder 12 grips a portion of the viscera such as the gullet or the lungs. This gripper is located on the intermediate wheel 5, the rotary movement of which is controlled by a drive 13 in synchrony with the rotary movement of the eviscerator, which is controlled by a drive 14. The synchronous movements cause the holder 12 to be located at the viscera set 16 when the grip thereof is to be established to take over the viscera set 16 from the evisceration means 9. The holder 12 may typically be formed with two halves capable of turning about a vertical axis for opening or closure around a viscera part.

The intermediate wheel rotates about its vertical shaft 15, whereby the holder 12 carries the viscera set 16 around to the viscera conveyor 4, where the grip in the viscera set is released to allow it to fall down on a viscera holder 17.

The viscera conveyor 4 comprises a carrying rail 18 which, as shown, may be tubular or have another profile. The carrying rail is suspended from holders 19 and extends about an end wheel 20 in which actuation members 21 for movement of the viscera holders 17 are controlled by a central, stationary member 22 with guide grooves in which positioning wheels 23 for the actuation members 21 run. Via the shaft 25, a drive 24 drives a lower plate 26 mounted on the shaft and with upright guides 27, on which the actuation members 21 are vertically displaceable when the positioning wheels are moved up and down in the guide grooves. The drive 24 controls the viscera conveyor in synchrony with the movement of the intermediate wheel 5 so that the viscera holder 17 is located at the viscera set 16 when it is released from the holder 12.

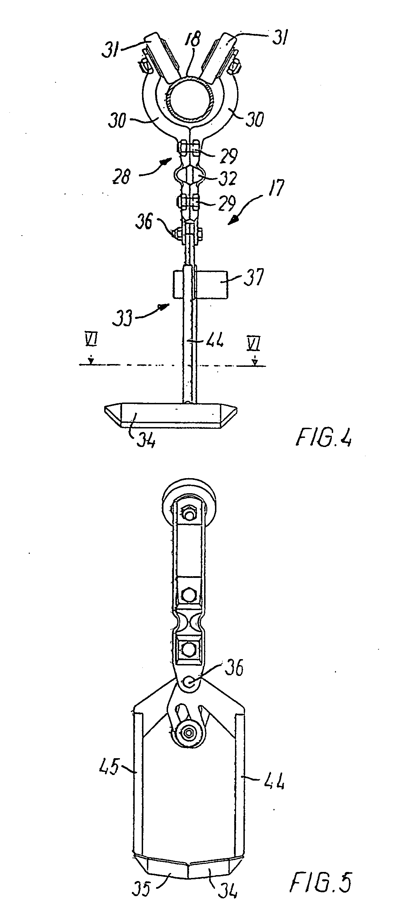

The viscera holder 17 is shown in more detail in Figs. 4-7. The viscera holder has an upper part 28 with two halves fixed to each other by bolts 29 so that an arc-shaped part 30 with a wheel 31 grips around the carrying rail 18. The individual holders are interconnected by wires or a similar pulling device so that the end wheel 20 can pull them around along the carrying rail like a conveyor. The pulling device may, for example, be mounted in an eye 32 on the upper part of the viscera holder. The viscera holder also has a lower part 33 with two bowl parts 34, 35 swingably journalled about a pivotal shaft 36 at the lower end of the upper part 28.

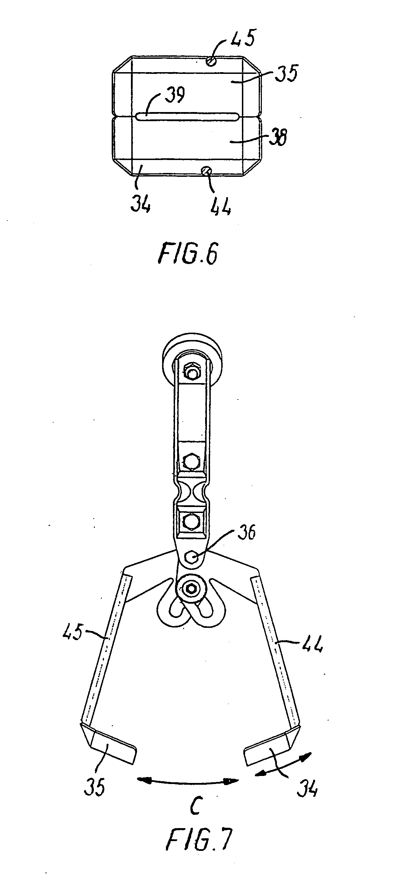

A central control member 37 comprises a control part movable up and down by the actuation member 21, and a shaft part passing horizontally through obliquely extending guide grooves 38, 39 at the upper end of the two bowl parts 34, 35 so that an upward movement of the control member 37 presses the two bowl parts outwards in a swinging movement about the pivotal shaft 36 to the position shown in Fig. 7 which, in this design of the viscera holder, is a receiving position in which the two bowl halves 34, 35 may be moved inwards at both sides of the suspended intestines of a suspended viscera set, the lower bowl parts having a large mutual distance. This distance C may, for example, equal from once to three times the width D of one bowl part. A downward movement of the control member 37 presses the two bowl parts inwards towards each other in a swinging movement about the pivotal shaft 36 to the position shown in Fig. 5, which is a transport position in which the two bowl halves 34, 35 can receive the fallen-down viscera on the top side of the carrier surface 38 constituted by the inner surfaces of the two bowl halves and transport the viscera past the inspection station and/or the units for organ treatment.

The movement of the viscera holders is adapted in synchrony with the eviscerator so that the two bowl halves of the viscera holder are moved in around the intestines at the time when the viscera set is released by the eviscerator and starts falling downwards and so that the two bowl halves of the viscera holder are moved towards each other before heart, liver and crop have had time to fall down to the level of the top side of the carrier surface.

In the transport position the carrier surface in the bowl bottom has an opening 39 through which the intestines 40 hang down, while the heart 41, liver 42 and crop 43 are lying on the top side of the carrier surface. The two bowl halves are carried by the rods 44, 45.

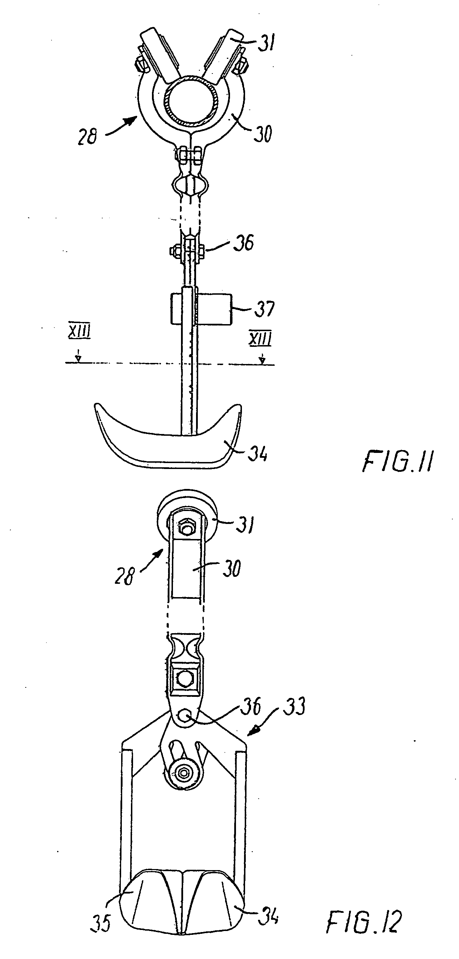

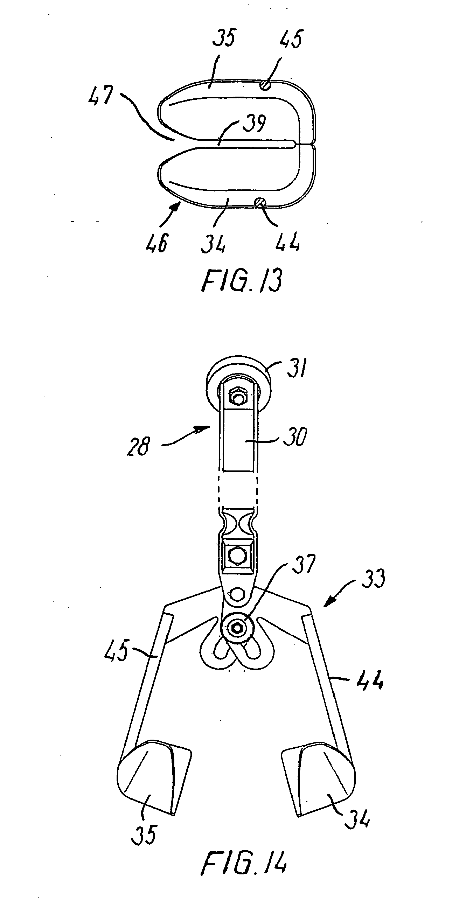

In the second embodiment of the viscera holder 17 shown in Figs. 8-14, the bowl halves are closed and abut each other with the control member 37 in its lower position when the viscera holder assumes the receiving position, which is shown in Fig. 13. At the receiving side, the opening 39 at the bowl bottom has a wedge-shaped expansion 47 suitable for catching the suspended intestines 40 when the viscera holder is swung towards and around the intestines, while the viscera set is held by the fixing member of the eviscerator. The viscera holder with the wedge-shaped expansion is formed with upwardly curved end edges at the receiving end and at the opposite end, as clearly appears from Fig. 11. The upper part of the viscera holder may be relatively long, generating a suitably large horizontal movement of the bowl of the viscera holder when the viscera holder is swung to the side in the direction of the suspended viscera as shown in Figs. 8 and 9. The movement of the viscera holders is adapted in synchrony with the eviscerator so that the viscera holder is swung in with its wedge-shaped expansion located around the intestines at the time when the viscera set has been released by the eviscerator and has started falling downwards, but before heart, liver and crop have had time to fall down to the level of the top side of the carrier surface.

The different embodiments can be combined into new embodiments within the scope of the following patent claims.

## Claims

1. A process for evisceration of slaughtered poultry, a viscera set (16) of a bird being gripped by a mechanical eviscerator (9) inside the bird and moved out of the bird and automatically delivered to a viscera holder (17) on a viscera conveyor (4) leading the viscera set away from the eviscerator (9), **characterized in that** the eviscerator (9) releases the viscera set (16) in a position above the top side of a carrier surface (38) of a viscera holder (17), whereupon the viscera set falls downwards and is received on the viscera holder in a manner so that the intestines (40) are suspended below the carrier surface while the heart (41), liver (42) and crop (43) lie on top of the top side of the carrier surface.

2. A process according to claim 1, **characterized in that** the eviscerator (9) fixes a portion of the viscera set (16), preferably an area of the gullet, inside the bird and keeps hold of the portion during the evisceration from the bird and until the grip in the portion is released at a position above the carrier surface (38).

3. A process according to claim 1 or 2,
**characterized in that** a fixing member (10) of the eviscerator (9) grips the viscera inside the bird and moves them out of the bird, and that the viscera holder (17) is moved under the fixing member at a level with the suspended intestines (40), whereupon the fixing member releases its grip in the viscera, the intestines of which fall down past the viscera holder, whereas the heart (41), liver (42) and crop (43) land on the carrier surface (38).

4. A process according to any one of claims 1 to 3, **characterized in that** the orientation of the viscera set (16) is changed in connection with the receipt thereof on the carrier surface (38) from a substantially vertical orientation produced by the eviscerator (9) before the viscera set is released therefrom to a substantially horizontally spread-out orientation of heart (41), liver (42) and crop (43).

5. A process according to any one of claims 1 to 4, **characterized in that** the viscera holder (17) can be actuated to assume at least a first position in which the intestines can pass from above and down past the carrier surface (38), and a second position in which the heart (41), liver (42) and crop (43) are prevented from passing from above down past the carrier surface.

6. A process according to any one of claims 1 to 4, **characterized in that** a carrier surface recess (39), open in the transverse direction, is moved in around the intestines under the heart (41), liver (42) and crop (43), which then fall down on the carrier surface.

7. A slaughtering system for the treatment of viscera from slaughtered poultry, comprising at least a bird conveyor (1), an eviscerator (2) and a viscera conveyor (4), the eviscerator having eviscerator units (9) automatically eviscerating viscera sets (16) from birds suspended in the bird conveyor, the eviscerated viscera sets being automatically transferred from the eviscerator units to viscera holders (17) on the viscera conveyor, **characterized in that** the viscera holders (17) are synchronously movable to positions under the eviscerator units (9) so that, after being released by the eviscerator unit, a viscera set (16) falls downwards and is gripped by the viscera holder in a manner so that the heart (41), liver (42) and crop (43) of the viscera set are lying on the top side of the carrier surface (38) and the intestines (40) are suspended through an opening (39) in the carrier surface.

8. A slaughtering system according to claim 7, **characterized in that** the viscera conveyor (4) runs past an inspection station (6), and that the heart (41), liver (42) and crop (43) of a viscera set (16) lie spread out on the carrier surface (38) while the viscera holder (17) passes the inspection station.

9. A slaughtering system according to claim 7 or 8, **characterized in that** the width of the opening (39) in the carrier surface (38) makes it possible to pull the gall bladder down through the opening while the heart (41), liver (42) and crop (43) remain on the top side of the carrier surface.

10. A slaughtering system according to claim 9, **characterized in that** the viscera conveyor (4) is associated with a cutting tool (7) which cuts off the gall bladder and intestines (40) from the heart (41), liver (42) and crop (43) below the carrier surface (38).

11. A viscera holder for a viscera conveyor in a slaughtering system, **characterized in that** the viscera holder (17) has an upper part (28) for mounting on the viscera conveyor (4), a central control member (37) and a lower part (33) with two bowl parts (34,35) swingable by the control member between a receiving position in which the bowl parts can be brought in around suspended intestines (40), and a transport position in which an opening (39) in the bowl bottom has a width allowing the intestines (40) to pass, but not the heart (41), liver (42) and crop (43).

12. A viscera holder according to claim 11, **characterized in that** the opening (39) in the bowl bottom is elongated with a width in the interval from 4 to 8 mm, preferably 5 to 7 mm, and a length of at least 30 mm, preferably at least 50 mm

13. A viscera holder according to claim 11 or 12, **characterized in that**, in the closed position of the bowl parts (34,35), the bowl bottom is a substantially square surface encircled by an upright bowl rim.

14. A viscera holder according to any one of claims 11 to 13, **characterized in that** the two bowl parts (34,35) of the viscera holder (17) are mutually movable between the receiving position in which the bowl parts are relatively far apart, and the transport position in which the bowl parts are close to each other with the edge portions substantially abutting each other.

15. A viscera holder according to any one of claims 11 to 13, **characterized in that** the two bowl parts (34,35) of the viscera holder (17) abut each other in the receiving position in which the opening (39) in the bowl bottom expands in a wedge shape (47) to a larger width in the direction of the receiving side, and that the bowl parts are swingable about a horizontal axis as a unit in a direction towards a suspended viscera set (16) to be delivered on the viscera holder.

## Patentansprüche

1. Verfahren zum Ausnehmen von geschlachtetem Geflügel, wobei die Innereien (16) eines Vogels von einem mechanischen Eviscerator (9) innerhalb des Vogels gegriffen und aus dem Vogel heraus genommen und automatisch einem Innereienhalter (17) auf einem Innereienförderer (4) zugeführt werden, der die Innereien vom Eviscerator (9) weg führt, **dadurch gekennzeichnet, dass** der Eviscerator (9) die Innerein (16) in einer Position oberhalb der Oberseite einer Tragfläche (38) eines Innereienhalters (17) loslässt, so dass die Innereien herabfallen und auf dem Innereienhalter auf eine solche Weise aufgenommen werden, dass die Eingeweide (40) unter der Tragfläche aufgehängt werden, während Herz (41), Leber (42) und Kropf (43) auf der Oberseite der Tragfläche liegen.

2. Verfahren nach Anspruch 1, **dadurch gekennzeichnet, dass** der Eviscerator (9) einen Teil der Innereien (16), vorzugsweise einen Bereich des Schlundes, innerhalb des Vogels fixiert und den Teil während des Herausnehmens aus dem Vogel und bis zum Lösen des Griffs in dem Teil an einer Position über der Tragfläche (38) hält.

3. Verfahren nach Anspruch 1 oder 2, **dadurch gekennzeichnet, dass** ein Fixierungselement (10) des Eviscerators (9) die Innereien innerhalb des Vogels greift und aus dem Vogel herausnimmt, und **dadurch**, dass der Innereienhalter (17) unter dem Fixierungselement in einer Höhe mit dem aufgehängten Eingeweide (40) bewegt wird, wonach das Fixierungselement den Griff um die Innereien löst, so dass die Eingeweide am Innereienhalter vorbeifallen, während Herz (41), Leber (42) und Kropf (43) auf der Tragfläche (38) landen.

4. Verfahren nach einem der Ansprüche 1 bis 3, **dadurch gekennzeichnet, dass** die Ausrichtung der Innereien (16) in Verbindung mit deren Aufnahme auf der Tragfläche (38) von einer im Wesentlichen vertikalen Ausrichtung, die vom Eviscerator (9) vor dem Loslassen der Innereien erzeugt wird, in eine im Wesentlichen horizontal ausgebreitete Ausrichtung von Herz (41), Leber (42) und Kropf (43) wechselt.

5. Verfahren nach einem der Ansprüche 1 bis 4, **dadurch gekennzeichnet, dass** der Innereienhalter (17) so betätigt werden kann, dass er wenigstens eine erste Position, in der die Eingeweide von oben nach unten die Tragfläche (38) passieren können, und eine zweite Position, in der verhindert wird, dass Herz (41), Leber (42) und Kropf (43) von oben nach unten die Trägerfläche passieren, einnimmt.

6. Verfahren nach einem der Ansprüche 1 bis 4, **dadurch gekennzeichnet, dass** eine in Querrichtung offene Tragflächenausnehmung (39) um die Eingeweide unter Herz (41), Leber (42) und Kropf (43) herum bewegt wird, die dann auf die Tragfläche fallen.

7. Schlachtsystem zur Behandlung von Innereien von geschlachtetem Geflügel, das wenigstens Folgendes umfasst: einen Vogelförderer (1), einen Eviscerator (2) und einen Innereienförderer (4), wobei der Eviscerator Evisceratoreinheiten (9) aufweist, die automatisch Innereien (16) aus im Vogelförderer aufgehängten Vögeln nehmen, wobei die ausgenommenen Innereien automatisch von den Evisceratoreinheiten zu Innereienhaltern (17) auf dem Innereienförderer übertragen werden, **dadurch gekennzeichnet, dass** die Innereienhalter (17) synchron zu Positionen unter den Evisceratoreinheiten (9) beweglich sind, so dass Innereien (16) nach dem Loslassen durch die Evisceratoreinheit herabfallen und vom Innereienhalter auf eine solche Weise gegriffen werden, dass Herz (41), Leber (42) und Kropf (43) der Innereien auf der Oberseite der Tragfläche (38) liegen und die Eingeweide (40) durch eine Öffnung (39) in der Tragfläche aufgehängt werden.

8. Schtachtsystem nach Anspruch 7, **dadurch gekennzeichnet, dass** der Innereienförderer (4) an einer Inspektionsstation (6) vorbei läuft, und dass Herz (41), Leber (42) und Kropf (43) von Innereien (16) auf der Tragfläche (38) ausgebreitet liegen, während der Innereienhalter (17) die Inspektionsstation passiert.

9. Schlachtsystem nach Anspruch 7 oder 8, **dadurch gekennzeichnet, dass** die Breite der Öffnung (39) in der Tragfläche (38) es ermöglicht, die Gallenblase nach unten durch die Öffnung zu ziehen, während Herz (41), Leber (42) und Kropf (43) auf der Oberseite der Tragfläche bleiben.

10. Schlachtsystem nach Anspruch 9, **dadurch gekennzeichnet, dass** der Innereienförderer (4) mit einem Schneidwerkzeug (7) assoziiert ist, das die Gallenblase und die Eingeweide (40) von Herz (41), Leber (42) und Kropf (43) unter der Tragfläche (38) abschneidet.

11. Innereienhalter für einen Innereienförderer in einem Schlachtsystem, **dadurch gekennzeichnet, dass** der Innereienhalter (17) einen oberen Teil (28) zum Montieren am Innereienförderer (4), ein zentrales Steuerelement (37) und einen unteren Teil (33) mit zwei Schüsselteilen (34, 35) aufweist, die von dem Steuerelement zwischen einer Aufnahmeposition, in der die Schüsselteile um die aufgehängten Eingeweide (40) herum gebracht werden können, und einer Transportposition, in der eine Öffnung (39) im Schüsselboden eine Breite hat, die es zulässt, dass die Eingeweide (40), aber nicht Herz (41), Leber (42) und Kropf (43) passieren könnten, schwenkbar sind.

12. Innereienhalter nach Anspruch 11, **dadurch gekennzeichnet, dass** die Öffnung (39) im Schüsselboden länglich ist, mit einer Breite im Bereich von 4 bis 8 mm, vorzugsweise 5 bis 7 mm, und einer Länge von wenigstens 30 mm, vorzugsweise wenigstens 50 mm.

13. Innereienhalter nach Anspruch 11 oder 12, **dadurch gekennzeichnet, dass** in der geschlossenen Position der Schüsselteile (34, 35) der Schüsselboden eine im Wesentlichen quadratische Fläche hat, die von einem aufrechten Schüsselrand umgeben ist.

14. Innereienhalter nach einem der Ansprüche 11 bis 13, **dadurch gekennzeichnet, dass** die beiden Schüsselteile (34, 35) des Innereienhalters (17) relativ zueinander zwischen der Aufnahmeposition, in der die Schüsselteile relativ weit beabstandet sind, und der Transportposition, in der die Schüsselteile nahe beieinander liegen, wobei die Randabschnitte im Wesentlichen aneinander anliegen, beweglich sind.

15. Innereienhalter nach einem der Ansprüche 11 bis 13, **dadurch gekennzeichnet, dass** die beiden Schüsselteile (34, 35) des Innereienhalters (17) in der Aufnahmeposition aneinander anstoßen, in der die Öffnung (39) des Schüsselbodens in einer Keilform (47) auf eine größere Breite in Richtung der Aufnahmeseite expandiert, und dass die Schüsselteile um eine horizontale Achse als eine Einheit in einer Richtung zu einer aufgehängten Innerel (16) schwenkbar sind, um dem Innereienhalter zugeführt zu werden.

## Revendications

1. Procédé d'éviscération de volailles abattues, un ensemble de viscères (16) d'un oiseau étant saisi par un dispositif d'éviscération mécanique (9) à l'intérieur de l'oiseau et étant extrait de l'oiseau et délivré automatiquement à un support de viscères (17) sur un transporteur de viscères (4) menant l'ensemble de viscères hors du dispositif d'éviscération (9), **caractérisé en ce que** le dispositif d'éviscération (9) relâche l'ensemble de viscères (16) dans une position au-dessus du côté supérieur d'une surface de support (38) d'un support de viscères (17), après quoi l'ensemble de viscères chute et est reçu sur le support de viscères de telle manière que les intestins (40) sont suspendus en dessous de la surface de support alors que le coeur (41), le foie (42) et le jabot (43) reposent sur le côté supérieur de la surface de support.

2. Procédé selon la revendication 1, **caractérisé en ce que** le dispositif d'éviscération (9) fixe une partit de l'ensemble de viscères (16), de préférence une zone du gosier, à l'intérieur de l'oiseau et maintient fermement la partie au cours de l'éviscération de l'oiseau et jusqu'à ce que la préhension de la partie soit relâchée à une position au-dessus de la surface de support (38).

3. Procédé selon la revendication 1 ou 2, **caractérisé en ce qu'**un élément de fixation (10) du dispositif d'éviscération (9) saisit les viscères à l'intérieur de l'oiseau et les extrait de l'oiseau, et **en ce que** le support de viscères (17) est déplacé sous l'élément de fixation au niveau des intestins suspendus (40), après quoi l'élément de fixation relâche sa préhension des viscères, dont les intestins chutent au-delà du support de viscères, alors que le coeur (41), le foie (42) et le jabot (43) atterrissent sur la surface de support (38).

4. Procédé selon l'une quelconque des revendications 1 à 3, **caractérisé en ce que** l'orientation de l'ensemble de viscères (16) est modifiée par rapport à la réception de celui-ci sur la surface de support (38) en passant d'une orientation sensiblement verticale produite par le dispositif d'éviscération (9) avant que l'ensemble de viscères ne soit relâché de celui-ci à une orientation sensiblement horizontalement étendue du coeur (41), du foie (42) et du jabot (43).

5. Procédé selon l'une quelconque des revendications 1 à 4, **caractérisé en ce que** le support de viscères (17) peut être actionné pour adopter au moins une première position dans laquelle les intestins peuvent passer au-dessus et en dessous de la surface de support (38), et une deuxième position dans laquelle le coeur (41), le foie (42) et le jabot (43) sont empêchés de passer au-dessus et en dessous de la surface de support.

6. Procédé selon l'une quelconque des revendications 1 à 4, **caractérisé en ce qu'**un évidement de surface de support (39), ouvert dans la direction transversale, est introduit autour des intestins sous le coeur (41), le foie (42) et le jabot (43), qui chutent ensuite sur la surface de support.

7. Système d'abattage pour le traitement de viscères extraites de volailles abattues, comprenant au moins un transporteur d'oiseaux (1), un dispositif d'éviscération (2) et un transporteur de viscères (4), le dispositif d'éviscération comportant des unités d'éviscération (9) éviscérant automatiquement des ensembles de viscères (16) d'oiseaux suspendus dans le transporteur d'oiseaux, les ensembles de viscères éviscérés étant transférés automatiquement des unités d'éviscération aux supports de viscères (17) sur le transporteur de viscères, **caractérisé en ce que** les supports de viscères (17) peuvent être déplacés de façon synchrone vers des positions sous les unités d'éviscération (9) de sorte que, après avoir été relâché par l'unité d'éviscération, un ensemble de viscères (16) chute et soit saisi par le support de viscères de telle manière que le coeur (41), le foie (42) et le jabot (43) de l'ensemble de viscères reposent sur le côté supérieur de la surface de support (38) et les intestins (40) sont suspendus à travers une ouverture (39) dans la surface de support.

8. Système d'abattage selon la revendication 7, **caractérisé en ce que** le transporteur de viscères (4) passe par un poste d'examen (6), et **en ce que** le cocur (41), le foie (42) et le jabot (43) d'un ensemble de viscères (16) sont étendus sur la surface de support (38) alors que le support de viscères (17) passe le poste d'examen.

9. Système d'abattage selon la revendication 7 ou 8, **caractérisé en ce que** la largeur de l'ouverture (39) dans la surface de support (38) permet de retirer la vésicule biliaire à travers l'ouverture alors que le coeur (41), le foie (42) et le jabot (43) restent sur le côté supérieur de la surface de support.

10. Système d'abattage selon la revendication 9, **caractérisé en ce que** le transporteur de viscères (4) est associé à un outil de coupe (7) qui sépare par découpe la vésicule biliaire et les intestins (40) du coeur (41), du foie (42) et du jabot (43) en dessous de la surface de support (38).

11. Support de viscères destiné à un transporteur de viscères dans un système d'abattage, **caractérisé en ce que** le support de viscères (17) comporte une partie supérieure (28) destinée à être montée sur le transporteur de viscères (4), un élément de commande central (37) et une partie intérieure (33) comportant deux parties de godet (34, 35) pouvant être basculées par l'élément de commande entre une position de réception dans laquelle les parties de godet peuvent être ramenées autour des intestins suspendus (40), et une position de transport dans laquelle une ouverture (39) dans le fond du godet présente une largeur laissant passer les intestins (40), mais pas le coeur (41), le foie (42) et le jabot (43).

12. Support de viscères selon la revendication 11, **caractérisé en ce que** l'ouverture (39) dans le fond du godet est allongée sur une largeur dans l'intervalle de 4 à 8 mm, de préférence de 5 à 7 mm, et sur une longueur d'au moins 30 mm, de préférence d'au moins 50 mm.

13. Support de viscères selon la revendication 11 ou 12, **caractérisé en ce que,** dans la position fermée des parties de godet (34, 35), le fond du godet est une surface sensiblement carrée entourée par une bordure de godet droite.

14. Support de viscères selon l'une quelconque des revendications 11 à 13, **caractérisé en ce que** les deux parties de godet (34, 35) du support de viscères (17) peuvent être mutuellement déplacées entre la position de réception dans laquelle les parties de godet sont relativement éloignées, et la position de transport dans laquelle les parties de godet sont rapprochées l'une de l'autre, les parties de bord venant buter sensiblement l'une sur l'autre.

15. Support de viscères selon l'une quelconque des revendications 11 à 13, **caractérisé en ce que** les deux parties de godet (34, 35) du support de viscères (17) viennent buter l'une sur l'autre dans la position de réception dans laquelle l'ouverture (39) dans le fond du godet s'étend suivant une forme de coin (47) sur une largeur plus grande dans la direction du côté de réception, et **en ce que** les parties de godet peuvent basculer ensemble autour d'un axe horizontal dans une direction vers un ensemble de viscères suspendu (16) devant être délivré sur le support de viscères.
